# EUROPÄISCHE PATENTANMELDUNG

(11) **EP 2 921 688 A1**
(43) Veröffentlichungstag der Anmeldung: **23.09.2015**
(21) Anmeldenummer: 14160964.4
(22) Anmeldetag: 20.03.2014
(51) Int. Cl.: F02M 25/07, F02B 37/24, F02B 37/20, F02B 37/00, F02C 6/12, F02B 39/08, F02B 37/02

(54) **Aufladesystem mit Abgas-Rezirkulation**

(71) Anmelder: ABB Turbo Systems AG, 5400 Baden (CH)
(72) Erfinder: Baets, Jozef, 5400 Baden (CH); Hubacher, Melanie, 8051 Zürich (CH); Codan, Ennio, 5103 Möriken (CH)
(74) Vertreter: ABB Patent Attorneys

(57) **Zusammenfassung**

Gemäss einem Ausführungsbeispiel der Erfindung umfasst die Abgasturbine (32) des Rezirkulations-Abgasturboladers (30) eines Aufladesystems mit mindestens einem Abgasturbolader (10, 20) und einem Abgasturbolader (30) in einem Rezirkulations-Pfad (61) Mittel zur Veränderung der wirksamen Turbinenfläche.

## Beschreibung

### TECHNISCHES GEBIET

Die Erfindung betrifft das Gebiet der aufgeladenen Verbrennungsmotoren. Insbesondere betrifft die Erfindung ein Aufladesystem für einen Verbrennungsmotor, sowie einen Verbrennungsmotor mit einem solchen Aufladesystem.

### Technologischer Hintergrund

Die Abgas-Rezirkulation, kurz: AGR (englisch Exhaust Gas Recirculation, kurz EGR) ist eine bekannte Methode zur Reduktion der NOx-Emissionen bei Verbrennungsmotoren. Bei aufgeladenen Motoren ist die Hochdruckvariante, d.h. die Entnahme von Abgas vor der Turbine des Turboladers und die Beimischung dem Gas nach dem Verdichter die energetisch günstigste Variante. Sie ist im Bereich der kleinen Motoren, insbesondere für PKW und LKW Anwendung, sehr verbreitet. Der Grund hierfür ist darin zu sehen, dass der Abgasdruck vor der Turbine in weiten Bereichen des Motorkennfeldes höher ist, als der Druck der Ladeluft nach dem Turboladerverdichter.

Bei Grossmotoren ist dies nicht der Fall, da meistens durch hohe Wirkungsgrade der Aufladung eine positive Druckdifferenz zwischen den Bedingungen vor und nach dem Zylinder erzeugt wird. Dies ist für den Motorbetrieb erwünscht, da dadurch die Spülung des Brennraums möglich wird und die Ladungswechselarbeit reduziert wird.

Die positive Druckdifferenz macht die AGR ohne zusätzliche Massnahmen unmöglich. Das Problem kann dadurch gelöst werden, indem ein Gebläse für die Druckerhöhung des Gases verwendet wird (US5657630A1). Diese Lösung erfüllt grundsätzlich die Aufgabe, hat aber die Nachteile, dass das Gebläse mit elektrischem oder mechanischem Antrieb sehr gross wird und eine nicht unerhebliche Antriebsleistung verbraucht, was sich negativ auf die Energiebilanz des Gesamtsystems bewirkt.

Aus DE 44 36 732 A1 ist eine andere Lösung bekannt, in welcher das Gebläse durch eine Gasturbine angetrieben wird. Die Maschine für die AGR sieht dann wie ein Turbolader aus, obwohl spezielle Komponenten zur Anwendung kommen. Diese Lösung wurde in einem Forschungsprojekt untersucht und hat sich als gute thermodynamische Variante erwiesen (CIMAC Paper: H. Stebler et al. "Reduction of NOx-emissions of a medium-speed d.i. diesel engine using miller system, exhaust gas recirculation, variable nozzle turbo charger and common rail fuel injection-Kopenhagen 1998).

Ein grosses Problem dieses Rezikulationsturboladers liegt insbesondere bei 2-Takt Motoren darin, dass der Verdichter im Rezirkulations-Pfad einerseits einen relativ grossen Massenstrom mit sehr kleinem Druckverhältnis und die den Verdichter im Rezirkulations-Pfad antreibende Turbine andererseits einen möglichst kleinen Massenstrom mit grossem Expansionsverhältnis verarbeiten muss.

Dies führt zu einer Fehlanpassung (einem Mismatching) der Komponenten.

Insbesondere in Teillastbetrieb braucht der AGR-turbolader viel Energie, die dem Aufladeprozess entnommen wird und dadurch steigt die thermische Belastung des Motors. Eine extreme Variabilität der Turbinengeometrie ist gefragt, die mit konvention verstellbarer Turbinengeometrie (VTG) nicht machbar ist. Eine Drossel vor der den Verdichter im Rezirkulations-Pfad antreibenden Turbine wäre eine einfache Lösung, allerdings auf Kosten einer höheren thermischen Belastung.

### Kurze Darstellung der Erfindung

Es ist eine Aufgabe der Erfindung, eine verbesserte Aufladung von Verbrennungsmotoren mit Abgas-Rezirkulation bereitzustellen.

Erfindungsgemäss kann die geforderte hohe Variabilität der Turbinenfläche auf einfache Weise durch variable Beaufschlagung der Turbine (Teilbeaufschlagung) realisiert werden.

Besonders vorteilhaft erfolgt dies mit einer Axialturbine mit grossem Schaufelträger-Durchmesser und kleiner Schaufelhöhe.

Um die Beanspruchung der Schaufeln und die Wirkungsgradverluste im zulässigen Bereich zu halten muss der Reaktionsgrad der Turbine sehr tief sein (<0.2).

Um die fehlende Energie für die Abgas-Rezirkulation und den Aufladeprozess zu kompensieren, kann den Abgasturbinen zusätzliche Energie zugeführt werden. Gemäss einer beispielhaften Ausführungsform der Erfindung erfolgt dies durch Zuführen von Dampf in den Abgasstrom auf die Abgasturbinen, wobei die Erzeugung von Dampf aus der Wärme im Rezirkulations-Pfad und/ oder dem Abgaspfad erfolgt. In Wärmetauschern in den Abgasleitungen kann die Wärme dem Abgas entzogen und zur Erzeugung von Dampf genutzt werden.

In einer ersten beispielhaften Ausführungsform weist das erfindungsgemässe Aufladesystem eine Aufladestufe auf, welche mindestens einen Abgasturbolader mit einem Verdichter zum Zuführen von Luft zu einem Einlass des Verbrennungsmotors und einer ersten Abgasturbine in einem Abgaspfad am Auslass des Verbrennungsmotors umfasst. Zudem weist das Aufladesystem einen Rezirkulationspfad zur Rezirkulation von Abgas des Verbrennungsmotors von dem Auslass des Verbrennungsmotors zu dem Einlass des Verbrennungsmotors auf, sowie einen Rezirkulations-Abgasturbolader mit einem Abgasverdichter und einer zweiten Abgasturbine, wobei der Abgasverdichter im Rezirkulationspfad angeordnet ist und einer Druckerhöhung des Abgases dient. Die Abgasturbine des Rezirkulations-Abgasturboladers weist erfindungsgemäss Mittel zur Veränderung der wirksamen Turbinenfläche auf.

In einer weiteren beispielhaften Ausführungsform des erfindungsgemässen Aufladesystems weist die Abgasturbine des Rezirkulations-Abgasturboladers einen Reaktionsgrad von weniger als 0.2 auf.

In einer weiteren beispielhaften Ausführungsform des erfindungsgemässen Aufladesystems umfasst die Abgasturbine des Rezirkulations-Abgasturboladers Mittel zum Zuführen von Dampf

Gemäss einer beispielhaften Ausführungsform des erfindungsgemässen Aufladesystems ist im Rezirkulationspfad ein Wärmetauscher zur Erzeugung des der Abgasturbine des Rezirkulations-Abgasturboladers zugeführten Dampfes angeordnet.

Gemäss einer beispielhaften Ausführungsform des erfindungsgemässen Aufladesystems ist im Abgaspfad ein Wärmetauscher zur Erzeugung des der Abgasturbine des Rezirkulations- Abgasturboladers zugeführten Dampfes angeordnet.

Gemäss einer beispielhaften Ausführungsform des erfindungsgemässen Aufladesystems ist im Rezirkulationspfad ein Wärmetauscher zur Erzeugung von Dampf angeordnet, wobei die Abgasturbine des mindestens einen Abgasturboladers der Aufladestufe Mittel zum Zuführen dieses Dampfes aufweist.

Gemäss einem beispielhaften Ausführungsform handelt es sich bei der Abgasturbine des Rezirkulations-Abgasturboladers um eine Gleichdruckturbine, bei welcher das Abgas vor und nach den Laufschaufeln den gleichen (statischen) Druck bzw. die gleiche Enthalpie aufweist. Eine Gleichdruckturbine hat einen Reaktionsgrad von Null.

Gemäss einem weiteren Ausführungsbeispiel der Erfindung ist eine Brennkraftmaschine mit einem oben beschriebenen Aufladesystem angegeben. Bei dieser Brennkraftmaschine handelt es sich insbesondere um einen grossen Verbrennungsmotor, der beispielsweise zum Antrieb eines Schiffes oder einer Lokomotive oder aber auch zur stationären Stromerzeugung in einem Kraftwerk verwendet wird.

Im Folgenden werden mit Verweis auf die Figuren Ausführungsbeispiele der Erfindung beschrieben.

### Kurze Beschreibung der Figuren

Fig. 1 zeigt eine schematische Darstellung eines Verbrennungsmotors mit einer beispielhaften Ausführungsform eines erfindungsgemässen Aufladesystems mit einem AGR-Turbolader sowie einem Dampfgenerator im Abgasstrang,
Fig. 2 zeigt eine schematische Darstellung eines Verbrennungsmotors mit einer beispielhaften Ausführungsform eines erfindungsgemässen Aufladesystems mit einem AGR-Turbolader sowie einem Dampfgenerator im Abgas-Rezirkulationspfad,
Fig. 3 zeigt ein Diagramm mit dem spezifischen Kraftstoffverbrauch relativ zur Motorlast für jeweils ein Aufladesystem mit einem AGR-Gebläse oder mit einem AGR-Abgasturbolader gemäss einer beispielhaften Ausführungsform der vorliegenden Erfindung,
Fig. 4 zeigt ein Diagramm mit dem Turbinenwirkungsgrad relativ zur Motorlast für jeweils ein Aufladesystem mit einem AGR-Gebläse oder mit einem AGR-Abgasturbolader gemäss einer beispielhaften Ausführungsform der vorliegenden Erfindung,
Fig. 5 zeigt ein Diagramm mit dem Temperaturverlauf am Austritt des Verbrennungsmotors relativ zur Motorlast für jeweils ein Aufladesystem mit einem AGR-Gebläse oder mit einem AGR-Abgasturbolader gemäss einer beispielhaften Ausführungsform der vorliegenden Erfindung,
Fig. 6 eine beispielhafte Ausführungsform eines entlang des Umfangs in mehrere Teilzuströme aufgeteilten Anströmbereichs einer Abgasturbine, mit welchem die wirksamen Turbinenfläche gezielt verändert werden kann, und
Fig. 7 eine beispielhafte Ausführungsform eines durch eine Trennwand entlang der Turbinenschaufelhöhe unterteilten Anströmbereichs einer Abgasturbine.

### Detaillierte Beschreibung von Ausführungsbeispielen

Die Darstellungen in den Figuren sind schematisch und nicht massstäblich.

In der folgenden Figurenbeschreibung werden für die gleichen oder ähnlichen Elemente die gleichen Bezugsziffern verwendet.

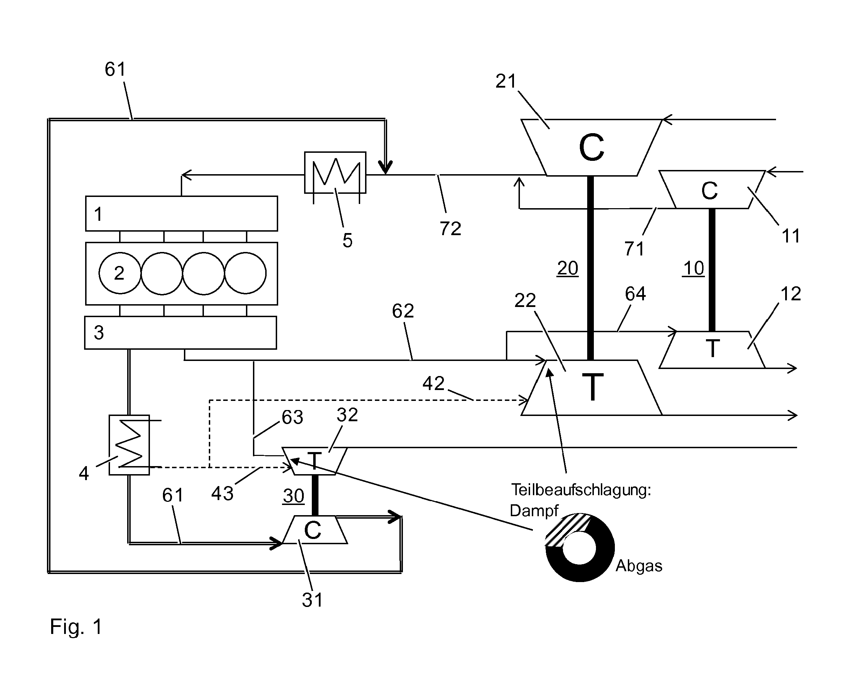

Fig. 1 zeigt eine schematische Darstellung eines Verbrennungsmotors mit einer beispielhaften Ausführungsform eines erfindungsgemässen Aufladesystems mit einem AGR-Turbolader sowie einem Dampfgenerator im Abgasstrang.

Es ist ein Verbrennungsmotor 2 vorgesehen, der einen Luft-Einlass (Lufteinlassreceiver) 1 und einen Abgas-Auslass (Abgasreceiver) 3 aufweist. Über den Abgaspfad 62 sowie den Abgaspfad 64 sind die Abgasturbinen 22, 12 zweier Abgasturbolader an den Auslassreceiver 3 angeschlossen. In der dargestellten Ausführungsform handelt es sich um zwei parallel geschaltete Abgasturbolader 20, 10 (Registeraufladung). Alternativ, je nach Anforderung an die Aufladestufe können die beiden Abgasturbolader auch hintereinander, als zweistufige Aufladestufe arrangiert sein (nicht dargestellt). Die beiden Abgasturbinen sind jeweils mit einem Luftverdichter 21, 11 verbunden und treiben diesen an. Die verdichtete Luft wird über einen Luftpfad 71, 72 und einen Ladeluftkühler 5 dem Luft-Einlass des Verbrennungsmotors zugeführt.

Weiter ist ein Rezirkulationspfad 61 zur Rezirkulation von Abgas des Verbrennungsmotors von dem Auslass 3 des Verbrennungsmotors zu dem Einlass 1 des Verbrennungsmotors vorgesehen. Im Rezirkulationspfad ist ein Rezirkulations-Abgasturbolader 30 mit einem Abgasverdichter 31 und einer zweiten Abgasturbine 32. Der Abgasverdichter im Rezirkulationspfad dient einer Druckerhöhung des Abgases. In der schematischen Darstellung ist angedeutet, dass die Abgasturbine des Rezirkulations-Abgasturboladers Mittel zur Veränderung der wirksamen Turbinenfläche umfasst (Teilbeaufschlagung). Zudem ist angedeutet, dass in der beispielhaften Ausführungsform nach Fig. 1 im Rezirkulationspfad 61 als Dampfgenerator ein Wärmetauscher 4 angeordnet ist, welcher dem Abgas Wärme entzieht und diese zur Erzeugung von Dampf nutzt. Der Dampf wird über die Dampfzuführungen 43 der Abgasturbine 32 des Rezirkulations-Abgasturboladers und/ oder der Abgasturbine 22 der Aufladestufe zugeführt. Der eingespeiste Dampf kann dabei mit einem höheren Druck hinzugefügt werden (beispielsweise 7 Bar) als der Druck des Abgases (beispielsweise 1.5 bar im Teillastbetrieb). Der Dampf kann mit dem Abgas vor der Einspeisung gemischt oder aber in eigenen Einströmbereichen auf die Turbinenlaufschaufeln geführt werden. Optional kann teilweise auch nur Dampf in die Turbine(n) eingespeist werden.

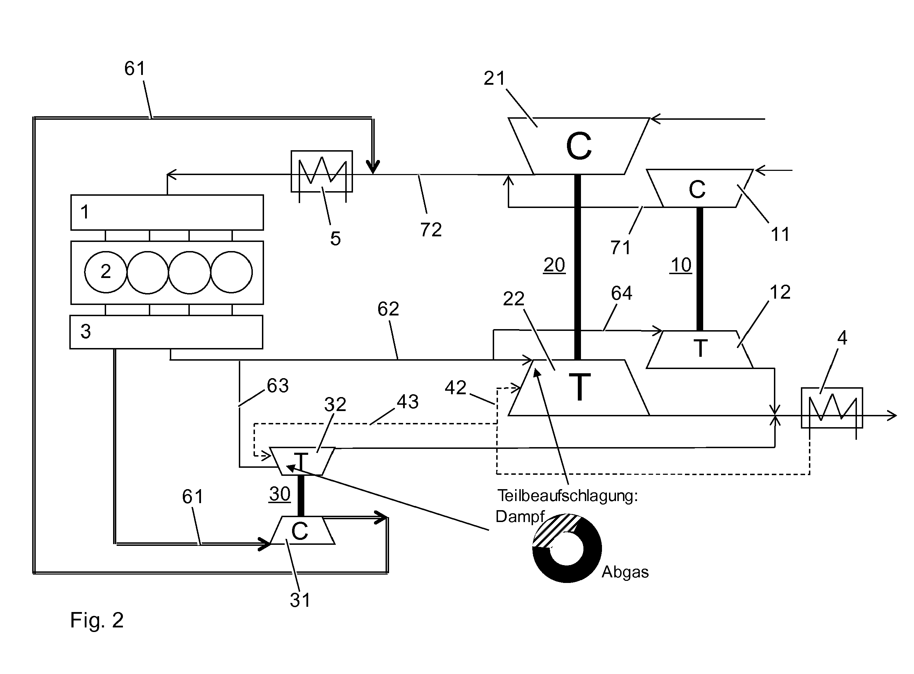

Fig. 2 zeigt eine schematische Darstellung eines Verbrennungsmotors mit einer beispielhaften Ausführungsform eines erfindungsgemässen Aufladesystems mit einem AGR-Turbolader sowie einem Dampfgenerator im Abgas-Rezirkulationspfad. Im Vergleich zur Ausführungsform nach Fig. 1 ist der Dampfgenerator nicht im Rezirkulationspfad angeordnet, sondern im ordentlichen Abgaspfad stromab der Abgasturbinen.

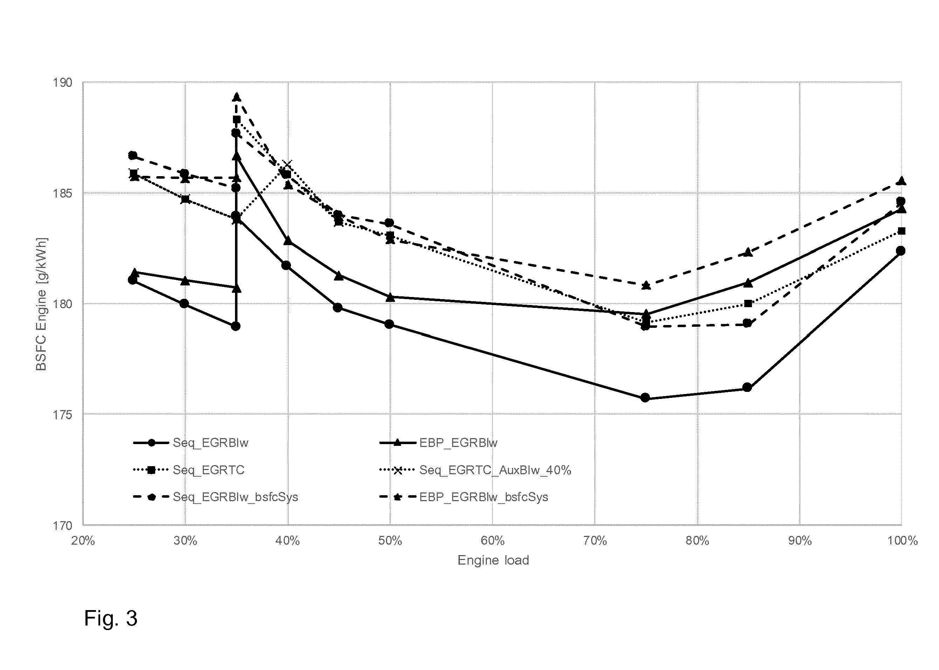

Fig. 3 zeigt ein Diagramm mit dem spezifischen Kraftstoffverbrauch relativ zur Motorlast für jeweils ein Aufladesystem mit einem AGR-Gebläse oder mit einem AGR-Abgasturbolader gemäss einer beispielhaften Ausführungsform der vorliegenden Erfindung,

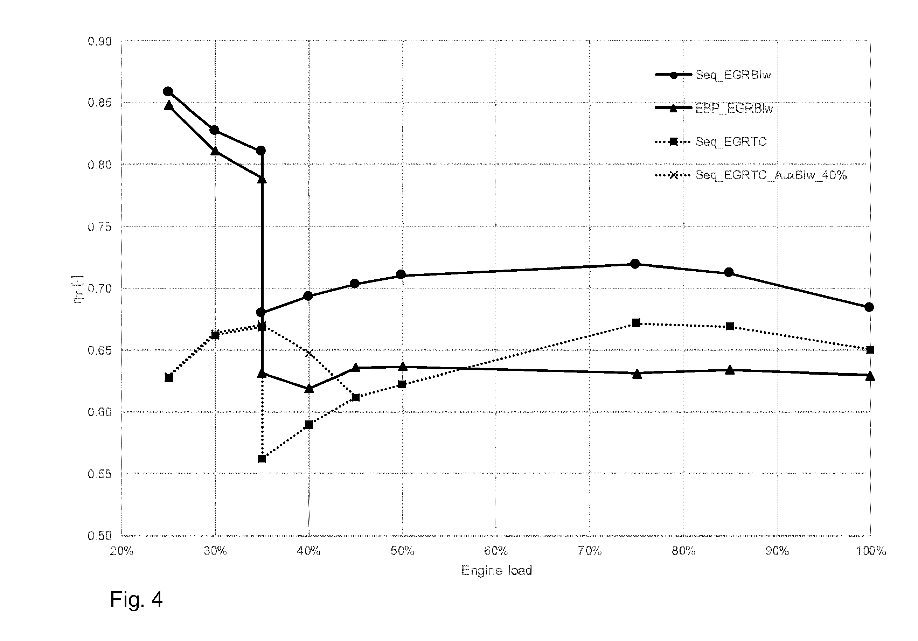

Fig. 4 zeigt ein Diagramm mit dem Turbinenwirkungsgrad relativ zur Motorlast für jeweils ein Aufladesystem mit einem AGR-Gebläse oder mit einem AGR-Abgasturbolader gemäss einer beispielhaften Ausführungsform der vorliegenden Erfindung,

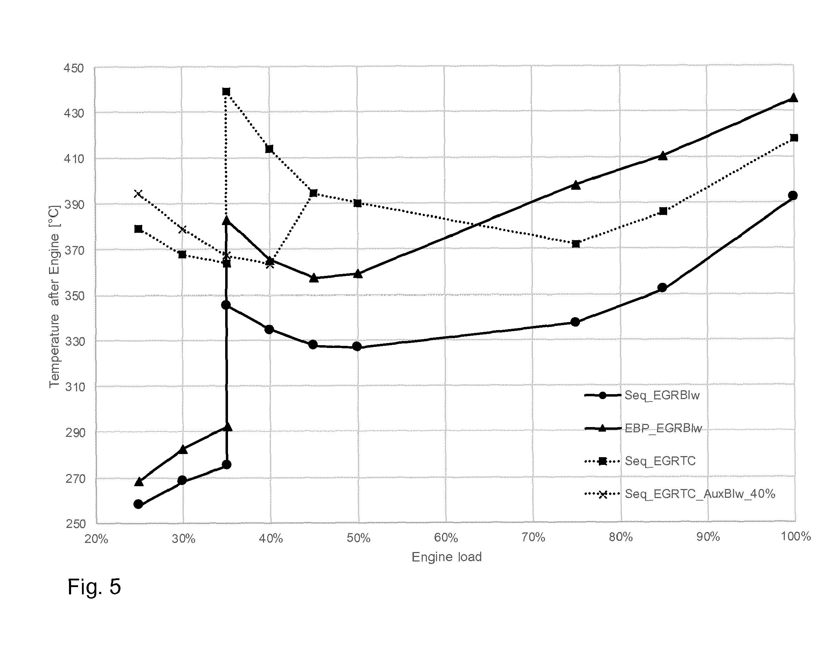

Fig. 5 zeigt ein Diagramm mit dem Temperaturverlauf am Austritt des Verbrennungsmotors relativ zur Motorlast für jeweils ein Aufladesystem mit einem AGR-Gebläse oder mit einem AGR-Abgasturbolader gemäss einer beispielhaften Ausführungsform der vorliegenden Erfindung,

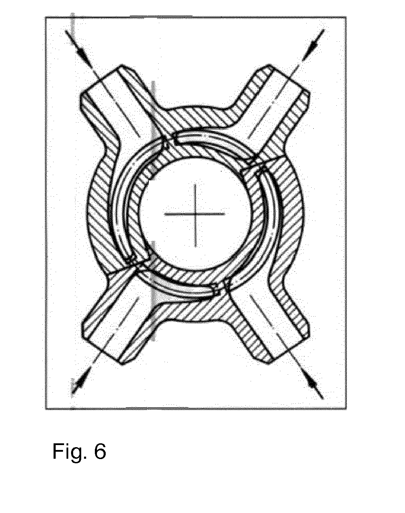

Fig. 6 eine beispielhafte Ausführungsform eines entlang des Umfangs in mehrere Teilzuströme aufgeteilten Anströmbereichs einer Abgasturbine, mit welchem die wirksamen Turbinenfläche gezielt verändert werden kann, und

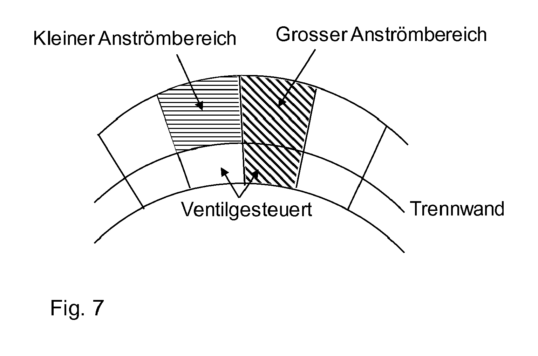

Fig. 7 eine beispielhafte Ausführungsform eines durch eine Trennwand entlang der Turbinenschaufelhöhe unterteilten Anströmbereichs einer Abgasturbine.

Ergänzend sei darauf hingewiesen, dass "umfassend" und "aufweisend" keine anderen Elemente oder Schritte ausschliesst und "eine" oder "ein" keine Vielzahl ausschliesst. Bezugszeichen in den Ansprüchen sind nicht als Einschränkungen anzusehen.

### Bezugszeichenliste

- 1: Einlass des Verbrennungsmotors
- 2: Verbrennungsmotors
- 3: Auslass des Verbrennungsmotors
- 4: Wärmetauscher (Dampferzeuger)
- 5: Ladeluftkühler
- 10, 20: Abgasturbolader der Aufladestufe
- 11, 21: Verdichter der Abgasturbolader der Aufladestufe
- 12, 22: Abgasturbine der Abgasturbolader der Aufladestufe
- 30: Rezirkulations-Abgasturbolader im Rezirkulationspfad
- 31: Verdichter des Rezirkulations-Abgasturbolader
- 32: Abgasturbine des Rezirkulations-Abgasturbolader
- 42: Dampfzuführung zur Abgasturbine der Aufladestufe
- 43: Dampfzuführung zur Abgasturbine des Rezirkulations-Abgasturboladers
- 61: Rezirkulationspfad
- 62, 64: Abgaspfad der Aufladestufe
- 71, 72: Ladeluftzuführung der Aufladestufe

## Patentansprüche

1. Aufladesystem für einen Verbrennungsmotor, das Aufladesystem aufweisend:
eine Aufladestufe, umfassend mindestens einen Abgasturbolader (10, 20) mit einem Verdichter (11, 21) zum Zuführen von Luft zu einem Einlass (1) des Verbrennungsmotors und einer ersten Abgasturbine (12, 22) in einem Abgaspfad (62, 64) am Auslass (3) des Verbrennungsmotors,
einen Rezirkulationspfad (61) zur Rezirkulation von Abgas des Verbrennungsmotors von dem Auslass (3) des Verbrennungsmotors zu dem Einlass (1) des Verbrennungsmotors;
einen Rezirkulations-Abgasturbolader (30) mit einem Abgasverdichter (31) und einer zweiten Abgasturbine (32), wobei der Abgasverdichter im Rezirkulationspfad angeordnet ist und einer Druckerhöhung des Abgases dient,
**dadurch gekennzeichnet, dass** die Abgasturbine des Rezirkulations-Abgasturboladers Mittel zur Veränderung der wirksamen Turbinenfläche umfasst.

2. Aufladesystem nach Anspruch 1, wobei die Abgasturbine des Rezirkulations-Abgasturboladers einen Reaktionsgrad von weniger als 0.2 aufweist.

3. Aufladesystem nach einem der Ansprüche 1 oder 2, wobei die Abgasturbine des Rezirkulations-Abgasturboladers Mittel zum Zuführen von Dampf umfasst.

4. Aufladesystem nach Anspruch 3, wobei im Rezirkulationspfad (61) ein Wärmetauscher (4) zur Erzeugung des der Abgasturbine (32) des Rezirkulations-Abgasturboladers (30) zugeführten Dampfes angeordnet ist,

5. Aufladesystem nach Anspruch 3, wobei im Abgaspfad (62, 64) ein Wärmetauscher (4) zur Erzeugung des der Abgasturbine (32) des Rezirkulations- Abgasturboladers (30) zugeführten Dampfes angeordnet ist.

6. Aufladesystem nach einem der Ansprüche 1 oder 2, wobei im Rezirkulationspfad (61) ein Wärmetauscher (4) zur Erzeugung von Dampf angeordnet ist, und die Abgasturbine (22) des mindestens einen Abgasturboladers (20) der Aufladestufe Mittel zum Zuführen dieses Dampfes umfasst.

7. Verbrennungsmotor, umfassend ein Aufladesystem nach einem der Ansprüche 1 bis 6.
